# NEUE EUROPÄISCHE PATENTSCHRIFT

(11) **EP 2 296 935 B2**
(45) Veröffentlichungstag und Bekanntmachung des Hinweises auf die Entscheidung über den Einspruch: **05.04.2023**
(45) Hinweis auf die Patenterteilung: 24.06.2020
(21) Anmeldenummer: 09779464.8
(22) Anmeldetag: 14.05.2009
(51) Int. Cl.: B60M 1/00, B60M 1/28

(54) **OBERLEITUNGSANLAGE**
OVERHEAD LINE SYSTEM
INSTALLATION DE LIGNE AÉRIENNE

(30) Priorität: 14.07.2008 DE 102008032993
(43) Veröffentlichungstag der Anmeldung: 23.03.2011
(73) Patentinhaber: Siemens Mobility GmbH, 81739 München (DE)
(72) Erfinder: BRODKORB, Albrecht, 99848 Sättelstädt (DE); DÖLLING, Andre, 91056 Erlangen (DE); SCHMIEDER, Axel, 04288 Leipzig (DE); SEMRAU, Manfred, 06110 Halle (DE)
(74) Vertreter: Siemens Patent Attorneys
(86) Internationale Anmeldenummer: PCT/EP2009/055791
(87) Internationale Veröffentlichungsnummer: WO 2010/006824

(56) Entgegenhaltungen:
- EP-A1- 1 496 369
- EP-A1- 1 717 567
- DE-A1- 19 652 369
- DE-A1-102004 063 373
- US-A- 4 806 855
- Andre Dölling: "Erhöhung der Belastung der Oberleitung", Dissertation, 2007, pages I-V, 1-149,

## Beschreibung

Die Erfindung betrifft eine Oberleitungsanlage.

Bei bisher üblichen Konstruktionsverfahren für eine Oberleitungsanlage wurden gemäß Vorgaben aus Normen und Regelwerken stets unterschiedliche Parameter unabhängig von ihrem örtlichen und zeitlichen Auftreten berücksichtigt. Solche Parameter sind beispielsweise der zu erwartende maximale Seitenwind oder die minimale und die maximale Temperatur, die am Ort der Oberleitungsanlage auftreten könnten. Es sind auch Parameter möglich, die unmittelbar den Aufbau der Oberleitungsanlage betreffen, wie z. B. die erforderliche Stromstärke im Fahrdraht oder die möglichen Wankbewegungen von Fahrzeugen, die später die Strecke befahren sollen.

Bei der Konstruktion der Oberleitungsanlage wurde bisher stets davon ausgegangen, dass für alle möglichen Parameter gleichzeitig ein Extremwert auftreten könnte. Folglich waren bisher die Sicherheitsreserven sehr hoch, was zu sehr hohen Kosten für die Oberleitungsanlage geführt hat.

Eine gattungsgemäße Oberleitungsanlage ist aus der Druckschrift US 4 806 855 A1 bekannt.

Der Erfindung liegt die Aufgabe zugrunde, eine Oberleitungsanlage anzugeben, mit der eine kostengünstige Oberleitungsanlage erstellt werden kann, die trotzdem durch äußere Einflüsse, aber auch durch die üblichen Einflüsse im Betrieb nicht beschädigt wird.

Die Aufgabe wird durch die Oberleitungsanlage nach Anspruch 1 gelöst.

Es wird also nicht mehr angenommen, dass alle Parameter gleichzeitig ihren maximalen oder minimalen Wert erreichen, da das aktuellen Beobachtungen, Messungen und Analysen widerspricht. Es wird auch nur dann davon ausgegangen, dass zwei Parameter gleichzeitig wirken, wenn das wirklich möglich ist. Dabei treten unterschiedliche Parameter in der Regel zeitlich überlappend auf, wobei die Wahrscheinlichkeit sehr groß ist, dass die möglichen maximalen oder minimalen Werte der Parameter nicht im Überlappungsbereich liegen. Es wird also der Vorteil erzielt, dass ein gleichzeitiges Auftreten von Extremwerten unterschiedlicher Parameter auszuschließen ist, so dass die Konstruktion der Oberleitungsanlage deutlich einfacher als früher sein kann, ohne dass Beeinträchtigungen der Sicherheit zu erwarten sind.

Ein Parameter ist eine klimatische Größe. Eine solche klimatische Größe ist die mögliche Windgeschwindigkeit, insbesondere des Seitenwindes, oder die mögliche minimale und maximale Temperatur, die dort, wo die Oberleitungsanlage entstehen soll, gemessen wurde.

Es hat sich herausgestellt, dass z. B. in Europa die maximale Windgeschwindigkeit niemals bei sehr niedrigen und auch nicht bei sehr hohen Temperaturen auftritt. Sowohl im Winter als auch im Sommer treten sehr hohe Windgeschwindigkeiten nur bei mittleren Temperaturen auf.

Es wird also insbesondere der Vorteil erzielt, dass die Oberleitungsanlage nicht für das gleichzeitige Auftreten einer extremen Temperatur und einer maximalen Windgeschwindigkeit ausgelegt sein muss. Eine solche Kombination tritt nämlich nicht auf. Da folglich der Abstand der Oberleitungsstützpunkte, der Längsspannweite genannt wird, länger gewählt werden kann als sonst, kommt man mit weniger Material aus, was die Kosten für die Oberleitungsanlage verringert.

Ein Parameter ist eine die elektrische Belastung der Oberleitungsanlage beschreibende Größe. Eine solche Größe ist die Stromstärke, die im Betrieb im Fahrdraht erforderlich sein wird. Um die erforderliche Stromstärke ermöglichen zu können, ist ein geeigneter Leitungsquerschnitt erforderlich, der sich auf das Gewicht des Fahrdrahtes und damit auch auf die Längsspannweite auswirkt.

Ein weiterer Parameter ist die Fahrzeugwankbewegung. Da die Schleifleiste am Stromabnehmer des Fahrzeuges den Fahrdraht nicht verlassen darf, ist bei der üblichen Zick-Zack-Verlegung des Fahrdrahtes neben der Breite der Schleifleiste auch die Wankbewegung des Fahrzeuges zu berücksichtigen, um eine geeignete Fahrdrahtseitenlage für die Oberleitungsanlage zu bestimmen, die sich dann auf die Längsspannweite und damit auf die Kosten der Oberleitungsanlage auswirkt. Die Fahrdrahtseitenlage ist der maximale seitliche Abstand des zickzack-verlegten Fahrdrahtes von einer gedachten Gleismittellinie.

Beispielsweise ist ein Parameter die Fahrzeugwankbewegung einer bestimmten Fahrzeugart. Es ist nämlich möglich, dass die Bahnstrecke, die mit einer Oberleitungsanlage versehen werden soll, nur mit bestimmten Fahrzeugarten, z. B. nur mit Hochgeschwindigkeitszügen oder aber nur mit Nahverkehrszügen oder sogar nur mit Straßenbahnen befahren werden soll. Es ist dann vorteilhaft nicht erforderlich, die Oberleitungsanlage für Wankbewegungen von Fahrzeugen auszulegen, die auf der betreffenden Strecke nie fahren werden.

Ein weiterer Parameter ist der durch die Fahrdrahtseitenlage des Fahrdrahtes bedingte Verschleiß der Schleifleiste eines Fahrzeuges. Der Verschleiß der Schleifleiste ist eine Folge ihrer Reibung am Fahrdraht und der Temperatur am Kontaktpunkt von Schleifleiste und Fahrdraht. Bei kleinerer Fahrdrahtseitenlage ergibt sich ein höherer Wärmeeintrag, weil der Kontaktpunkt auf der Schleifleiste langsamer hin und her wandert, und folglich eine höhere Temperatur der Schleifleiste, was zu einem vergrößerten Verschleiß führt. Wenn der Verschleiß mit, der am Ort der Bahnstrecke üblichen Temperatur in Beziehung gebracht wird, kann bei einer relativ niedrigen üblichen Temperatur ein höherer Wärmeeintrag in die Schleifleiste, z. B. durch Reibung, toleriert werden, so dass an Orten mit relativ niedriger Durchschnittstemperatur eine kleinere Fahrdrahtseitenlage und folglich auch eine größere Längsspannweite möglich sind als an Orten mit relativ hoher Durchschnittstemperatur, ohne dass die Sicherheit gefährdet ist. Dadurch ergibt sich eine Einsparung an Material.

Weiterhin sind Messvorrichtungen für das ständige Überwachen der Parameter vorhanden. Es werden also die Parameter nicht nur vor der Konstruktion der Oberleitungsanlage bestimmt, sondern es sind auch Messungen der Parameter möglich, nachdem die Oberleitungsanlage fertig gestellt ist und die Bahnstrecke in Betrieb genommen wurde.

Damit wird der besondere Vorteil erzielt, dass, selbst ein unwahrscheinlicher Anstieg eines Parameters während des Betriebes im Betriebsablauf berücksichtigt werden kann, um die Sicherheit zu steigern.

Die Messvorrichtungen sind mit mindestens einer Auswerteeinheit verbunden zum Vergleichen der Parameter mit Grenzwerten. Die Auswerteeinheit ist dabei mit einer Warneinrichtung und mit einer Einrichtung zum Verändern des Bahnbetriebes verbunden, die bei Überschreiten eines der Grenzwerte aktivierbar sind.

Es kann vorteilhaft, wenn wider Erwarten ein Grenzwert überschritten wird, entweder ein Warnsignal, z. B. an den Fahrzeugführer, abgegeben werden, oder es kann sogar der Bahnbetrieb verändert werden. Beispielweise kann ein Zug angehalten werden.

Mit der Oberleitungsanlage wird insbesondere der Vorteil erzielt, dass eine sichere Oberleitungsanlage entsteht, die mit weniger Material und Bauteilen als bisher auskommt.

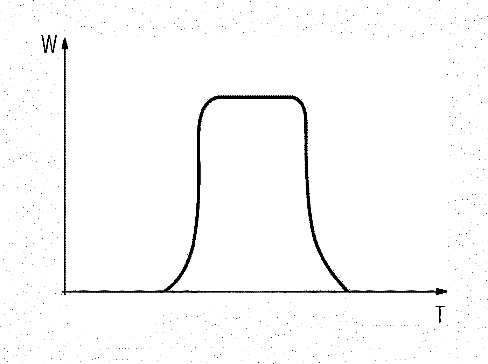

Die Zeichnung zeigt für Mitteleuropa schematisch die Wahrscheinlichkeit für Windgeschwindigkeiten über 15 m/s in Abhängigkeit von der Lufttemperatur. Es zeigt sich, dass sowohl bei niedrigen als auch bei hohen Lufttemperaturen hohe Windgeschwindigkeiten nicht auftreten. Beim Verfahren zur Konstruktion einer Oberleitungsanlage muss also nicht berücksichtigt werden, dass eine hohe Windgeschwindigkeit bei einer tiefen Temperatur oder eine hohe Windgeschwindigkeit bei einer hohen Temperatur vorkommt. Hohe Windgeschwindigkeiten müssen nur berücksichtigt werden in Verbindung mit durchschnittlichen Lufttemperaturen. Daraus ergibt sich bei sicherem Aufbau der Oberleitungsanlage eine konstruktive Vereinfachung, so dass weniger Material gebraucht wird und weniger Kosten als bisher entstehen.

## Patentansprüche

1. Oberleitungsanlage für eine von einem Fahrzeug mit Stromabnehmer befahrene Strecke, entlang der ein durch eine Schleifleiste des Stromabnehmers kontaktierbarer Fahrdraht von in einer Längsspannweite voneinander beabstandeten Oberleitungsstützpunkten getragen wird,
wobei die Längsspannweite so ausgebildet ist, dass mehrere die Längsspannweite beeinflussende Parameter berücksichtigt sind, wobei die Parameter Temperatur, Windgeschwindigkeit, Stromstärke, Fahrzeugwankbewegung oder Verschleiß der Schleifleiste eines Fahrzeugs sind, und ein gleichzeitiges Auftreten von Extremwerten von gleichzeitig auftretenden Parametern für die Dauer des gleichzeitigen Auftretens ausgeschlossen sind,
wobei Messvorrichtungen für das ständige Überwachen der Parameter vorhanden sind,
**dadurch gekennzeichnet, dass** die Messvorrichtungen mit mindestens einer Auswerteeinheit zum Vergleichen der Parameter mit Grenzwerten verbunden sind und dass die Auswerteeinheit mit einer Warneinrichtung und mit einer Einrichtung zum Verändern des Bahnbetriebs verbunden ist, die bei Überschreiten eines der Grenzwerte aktivierbar sind.

## Claims

1. Overhead line system for a track section traversed by a vehicle with a current collector, along which a contact wire contactable by a contact strip of the current collector is supported by overhead line support points spaced apart from one another in a longitudinal span,
wherein the longitudinal span is embodied such that a plurality of parameters influencing the longitudinal span are taken into account, wherein the parameters are temperature, wind speed, current strength, vehicle rolling motion or wear and tear of the contact strip of a vehicle, and a simultaneous occurrence of extreme values of simultaneously occurring parameters is excluded for the duration of the simultaneous occurrence,
wherein measurement devices are present for the continuous monitoring of the parameters,
**characterised in that** the measuring devices are connected to at least one evaluation unit for comparing the parameters with limit values and that the evaluation unit is connected to a warning device and to a device for changing railway operation, which can be activated when one of the limit values is exceeded.

## Revendications

1. Système de ligne de courant pour une voie, qui est parcourue par un véhicule ayant un appareil de prise de courant pouvant être contacté par un frotteur de l'appareil de prise de courant et le long de laquelle un fil de contact est porté par des points d'appui de la ligne de contact à distance les uns des autres dans une portée longitudinale,
la portée longitudinale étant constituée de manière à prendre en compte plusieurs paramètres influençant la portée longitudinale, les paramètres étant la température, la vitesse du vent, l'intensité du courant, le roulis du véhicule ou l'usure du frotteur d'un véhicule, et une apparition simultanée de valeurs extrêmes de paramètres se produisant en même temps étant exclue pendant la durée de l'apparition simultanée,
dans lequel des installations de mesure sont prévues pour le contrôle permanent des paramètres,
**caractérisé en ce que** les installations de mesure sont reliées à au moins une unité d'exploitation pour comparer les paramètres à des valeurs limites et **en ce que** l'unité d'exploitation est reliée à un dispositif d'alerte et à un dispositif de modification du service de la voie, qui peuvent être activés si l'une des valeurs limites est dépassée.
